Europäisches Patentamt

European Patent Office

Office européen des brevets

(11) Veröffentlichungsnummer: **0 317 897**
**A1**

# (12) EUROPÄISCHE PATENTANMELDUNG

(21) Anmeldenummer: 88119109.2

(22) Anmeldetag: 17.11.88

(51) Int. Cl.4: **C09G 1/04**

(30) Priorität: 26.11.87 DE 3740112

(43) Veröffentlichungstag der Anmeldung:
31.05.89 Patentblatt 89/22

(84) Benannte Vertragsstaaten:
**AT BE CH DE ES FR GB GR IT LI LU NL SE**

(71) Anmelder: **Henkel Kommanditgesellschaft auf Aktien**
**Postfach 1100 Henkelstrasse 67**
**D-4000 Düsseldorf 1(DE)**

(72) Erfinder: **Soldanski, Heinz-Dieter**
**Neckarstrasse 64**
**D-4300 Essen 18(DE)**
Erfinder: **Holdt, Bernd-Dieter**
**Bismarckweg 9**
**D-4000 Düsseldorf(DE)**
Erfinder: **Kalibe, Marlies**
**Aktienstrasse 41**
**D-4050 Mönchengladbach 1(DE)**
Erfinder: **Kramer, Georg**
**Cranachstrasse 12**
**D-4000 Düsseldorf(DE)**

(54) **Verfahren zur Reinigung und Pflege von Möbeln.**

(57) Eine wäßrige Emulsion von Paraffinöl, die zusätzlich Wachs und andere Pflegesubstanzen, Benzin und Hilfsstoffe enthalten kann, wird mit Wasser im Verhältnis 1 : 20 bis 1 : 500 verdünnt und in dieser Form mit Hilfe eines saugfähigen Tuches zur Reinigung der Möbel verwendet. Neben guter Reinigung wird eine ausreichende Pflege empfindlicher Holzoberflächen erreicht, ohne daß es zu unerwünschtem Glanz kommt.

EP 0 317 897 A1

## Verfahren zur Reinigung und Pflege von Möbeln .

Die vorliegende Erfindung betrifft ein Verfahren zur Reinigung und Pflege von harten Oberflächen an Möbeln, bei dem eine Emulsion von Paraffinöl in Wasser angewandt wird.

Herkömmliche Möbelpflegemittel enthalten als pflegende Komponente meistens Silikonöle, Paraffinöle und/oder Wachse sowie als reinigende Komponente organische Lösungsmittel wie Benzin, Butylacetat und Chlorkohlenwasserstoffe. Sie können in Form einer Lösung im organischen Lösungsmittel oder auch als Emulsion der hydrophoben Komponenten in Wasser vorliegen. Bei der Anwendung werden die Mittel unverdünnt mit Hilfe eines Lappens oder durch Aufsprühen auf die Oberflächen der Möbel aufgebracht, mit Hilfe eines Tuches oder eines Schwammes verteilt und gegebenenfalls auspoliert.

Bei mäßiger Reinigungswirkung zeichnen sich diese Mittel dadurch aus, daß sie den behandelten Oberflächen einen deutlichen bis starken Glanz verleihen. Dieser früher sehr erwünschte Glanzeindruck wird in neuerer Zeit vom Verbraucher häufig als störend empfunden und als Folge eines unerwünschten Rückstandes auf den Möbeln angesehen. Dagegen wird die reinigende Wirkung des herkömmlichen Verfahrens zunehmend als unzureichend bewertet.

Der Vorschlag, anstelle der oben geschilderten Möbelpflegemittel übliche Haushaltsreinigungsmittel auch für die Reinigung von lackierten Holzflächen einzusetzen, schafft nur bedingt Abhilfe, da diese Reinigungsmittel, die im wesentlichen wäßrige Tensid lösungen darstellen, bei wiederholter Anwendung das Holz auslaugen und zu einer Beschädigung der Lackoberflächen führen können.

Der vorliegenden Erfindung lag in diesem Zusammenhang die Aufgabe zugrunde, ein Verfahren zu entwickeln, bei dem sowohl die Reinigung als auch die Pflege der Möbel den heutigen Bedürfnissen besser angepaßt sind.

Das erfindungsgemäße Verfahren besteht darin, eine Emulsion von Paraffinöl in Wasser im Verhältnis 1 : 500 bis 1 : 20 mit Wasser zu verdünnen und die zu behandelnden Oberflächen mit dieser verdünnten wäßrigen Zubereitung abzuwischen.

Der Vorteil des neuen Verfahrens liegt darin, daß in einem Arbeitsgang sowohl der lose aufliegende Staub entfernt als auch fester haftende Verunreinigungen in hervorragender Weise abgelöst werden und gleichzeitig die Oberfläche ausreichend mit Pflegesubstanz versehen wird. Dadurch wird auch bei häufiger Anwendung des Verfahrens das Auslaugen der Oberfläche vermieden, ohne daß ein zusätzlicher unerwünschter Glanz auf die Oberflächen aufgebracht wird.

Die im erfindungsgemäßen Verfahren eingesetzte Paraffinölemulsion hat im unverdünnten Zustand ungefähr folgende Zusammensetzung:

| | |
|---|---|
| Paraffinöl | 5 - 30 Gew.-% |
| Emulgator | 1 - 5 Gew.-% |
| Wachs | 0 - 10 Gew.-% |
| Weitere Pflegesubstanzen | 0 - 10 Gew.-% |
| Benzin | 0 - 20 Gew.-% |
| übliche Hilfsstoffe | 0 - 5 Gew.-% |
| Wasser | ad 100 Gew.-% |

Als Paraffinöle eignen sich im allgemeinen solche Öle, die Siedepunkte oberhalb 300 °C aufweisen. Bevorzugt werden raffinierte Paraffinöle eingesetzt, die weitgehend frei von aromatischen Kohlenwasserstoffen und ungesättigten Verbindungen sind. Besonders bevorzugt werden Gemische von gesättigten und überwiegend geradkettigen Kohlenwasserstoffen mit Dichten zwischen 0,8 und 0,9 und Viskositäten zwischen etwa 30 und etwa 1000 mPas bei 20 °C. Die Paraffinöle sind in den Mitteln im allgemeinen mit 5 bis 30 Gew.-%, vorzugsweise mit 10 bis 25 Gew.-% enthalten.

Die verwendeten Emulgatoren können aus den Klassen der anionischen, nichtionischen, kationischen oder zwitterionischen Emulgatoren stammen, sofern diese Emulgatoren zur Bildung von Öl in Wasser-Emulsionen befähigt sind. Bevorzugt werden anionische und nichtionische Emulgatoren oder deren Mischungen verwendet. Besonders bevorzugt werden dabei solche Emulgatoren, die als Tenside zugleich eine hohe Reinigungswirkung entfalten. Auch die Mischung eines guten Paraffinemulgators mit einem stark reinigungswirksamen Tensid kann besonders brauchbar sein. Als besonders gut geeignet haben sich folgende Emulgatoren und Tenside erwiesen: $C_{12}$-$C_{20}$-Fettsäuresorbitanester, ethoxylierte $C_{16}$-$C_{20}$-Fettsäu-

resorbitanester, Additionsprodukte aus langkettigen Alkoholen oder Alkylphenolen mit 12 bis 20 C-Atomen und 3 bis 30 Mol Ethylenoxid; Alkalisalze von Fettalkoholsulfaten mit 12 - 18 C-Atomen, von Sulfaten der Addukte aus $C_{12}$-$C_{18}$-Fettalkoholen und 2 bis 4 Mol Ethylenoxid und von Alkansulfonaten mit 14 bis 20 C-Atomen.Die Emulgatoren sind in den Mitteln im allgemeinen in Mengen von 1 bis 5 Gew.-%, vorzugsweise in Mengen zwischen 2 und 4 Gew.-% enthalten.

Zusätzlich zu den Paraffinölen können die Mittel als pflegende Komponente ein Wachs oder ein Gemisch mehrerer Wachse in kleineren Mengen enthalten. Geeignet sind neben natürlichen Wachsen wie Candelilla- und Carnaubawachs vor allem synthetische und teilsyn thetische Wachse wie Montanesterwachse, Polyethylenwachse und Paraffinwachse. Besonders bevorzugt werden die aus Rohmontanwachs gewonnenen Esterwachse, die auch teilweise verseift sein können. Diese Wachse weisen im allgemeinen Tropfpunkte im Bereich von 60 - 105 °C, Säurezahlen von etwa 10 bis etwa 100 und Verseifungszahlen im Bereich von etwa 80 bis etwa 160 auf. Der Anteil des Wachses in den Mitteln liegt vorzugsweise unter dem Gehalt an Paraffinöl und beträgt höchstens 10 Gew.-%, bezogen auf das unverdünnte Mittel. Vorzugsweise liegt er zwischen 0,2 und 5 Gew.-%.

Gegebenenfalls können die Mittel weitere Pflegesubstanzen in kleinen Mengen, die vorzugsweise nicht mehr als die Hälfte des Paraffinölanteils ausmachen, enthalten. Zu diesen Pflegesubstanzen zählen in erster Linie Silikönöle, spezielle Öle pflanzlichen Ursprungs und Harze. Bei den Silikonölen handelt es sich im allgemeinen um Polydimethylsiloxane, die vorzugsweise Viskositäten von 100 bis 3000 mPas bei 20 °C aufweisen. Als geeignete pflanzliche Öle sind beispielsweise Pinienöl, Rosenholzöl und Zedernöl zu nennen. Zu den geeigneten Harzen zählen sowohl natürliche als auch synthetische emulgierbare Harze.

Die genannten weiteren Pflegesubstanzen können allein oder in Mischung in den Mitteln enthalten sein. Ihr Anteil liegt bei höchstens 10 Gew.-%, und vorzugsweise zwischen 0,1 und 5 Gew.-%, bezogen auf das unverdünnte Mittel.

Als weitere Komponente können die eingesetzten Mittel Benzin zur Unterstützung der Reinigungswirkung enthalten. Geeignet sind vor allem Kohlenwasserstoffgemische aus der Erdöldestillation mit Siedepunkten zwischen 120 und 250 °C, vorzugsweise 140 und 220 °C. Besonders bevorzugt werden gereinigte Benzine ohne oder mit geringem Gehalt an aromatischen Kohlenwasserstoffen.

Dagegen können die Benzine bis etwa 20 Gew.-% an anderen organischen Lösungsmitteln aus der Gruppe Ester, Ketone und Chlorkohlenwasserstoffe mit Siedepunkten zwischen 70 und 280 °C enthalten, sind aber vorzugsweise frei von anderen Lösungsmitteln.

Weiterhin können den Mitteln Hilfsstoffe zugesetzt sein, wie sie in derartigen Emulsionen üblich sind. Besonders zu erwähnen sind Konservierungsmittel zur Vermeidung mikrobiologischen Befalls, Parfümöle, Farbstoffe, Schaumregulatoren und Zusätze zur Beeinflussung der Viskosität. Der Gehalt an solchen Hilfstoffen liegt im allgemeinen nicht über 5 Gew.-%, vorzugsweise zwischen 0,001 und 2 Gew.-%.

Zur Durchführung des Verfahrens selbst werden keine ungewöhnlichen Geräte benötigt. Im allgemeinen wird das flüssige, unverdünnte Mittel aus einer Vorratsflasche in die vorbereitete Menge an Wasser, die sich beispielsweise in einem Eimer befindet, dosiert und durch kurzes Umrühren mit dem Wasser vermengt. Das Mischungsverhältnis kann in weiten Grenzen, etwa zwischen 1 : 500 und 1 : 20 variiert und so den jeweiligen Anforderungen, insbesondere der Schmutzbelastung der Oberfläche, angepaßt werden. Für die meisten Zwecke reicht dabei eine Verdünnung von 1 : 50 bis 1 : 500 aus. Die Anwendung der Reinigungslösung auf die Oberfläche geschieht dann beispielsweise in der Form, daß ein saugfähiges Tuch mit der Lösung benetzt wird, durch Abpressen oder Auswringen überschüssige Flüssigkeit aus dem Tuch entfernt wird und die Oberfläche mit dem feuchten Tuch gewischt wird, bis die gewünschte Reinheit erreicht ist. Auf der Oberfläche verbleiben bei dieser Behandlung nur verhältnismäßig geringe Mengen an Wasser, während ein großer Teil der in der Reinigungslösung enthaltenen Pflegesubstanzen gleichmäßig verteilt auf der Oberfläche haften bleibt. Staub und ursprünglich anhaftender Schmutz hingegen werden mit dem feuchten Tuch abgenommen und der Reinigungsmittellösung zugeführt, wenn das Tuch erneut mit der Lösung in Kontakt gebracht und darin vor dem nächsten Reinigungsvorgang ausgespült wird. Da die auf den gereinigten Oberflächen zurückbleibende Wassermenge gering ist, entfällt normalerweise ein Nachtrocknen, d. h., das Verfahren beschränkt sich im wesentlichen auf einen einzigen Arbeitsgang an der Oberfläche. Anstelle eines saugfähigen Tuches können bei dem erfindungsgemäßen Reinigungsverfahren selbstverständlich andere weiche saugfähige Materialien, beispielsweise Vliesstoffe, Schwämme oder Fensterleder mit gleicher Wirksamkeit verwendet werden. Besonders geeignet sind die aus synthetischen Materialien hergestellten Vliesstoffe und Schwammtücher.

Das erfindungsgemäße Verfahren eignet sich für die Reinigung und Pflege von Möbeloberflächen aller Art mit Ausnahme von Glas und Textil. Vorzüglich geeignet ist es für die Behandlung von Oberflächen aus Holz und Holzwerkstoffen, insbesondere geölte, lasierte und lackierte Flächen, da hier das ausgewogene Verhältnis von Reinigungs- und Pflegewirkung besonders zur Geltung kommt.

Beispiele

1. Mittel zur Anwendung im erfindungsgemäßen Verfahren

| 10,0 Gew.-% | Paraffinöl, Siedebereich 364 - 431 °C |
|---|---|
| 2,0 Gew.-% | Oleyl-/Cetylalkohol + 10 EO (Eumulgin 0 10[R]) |
| 0,28 Gew.-% | Kokosalkohol + 2 EO-Sulfat-Na-Salz (Texapon N[R]) |
| 2,5 Gew.-% | Montanesterwachs (Tropfpunkt 83 - 90 °C) |
| 15,0 Gew.-% | aromatenarmes Benzin (Siedebereich 145 - 170 °C) |
| 0,2 Gew.-% | Parfüm |
| 0,003 Gew.-% | Konservierungsmittel |
| 70,017 Gew.-% | Wasser |

2. Reinigungs- und Pflegeverfahren

Aus einer Vorratsflasche, die die unter Beispiel 1 beschriebene flüssige Paraffinemulsion enthielt, wurden mit Hilfe einer Dosierkappe 50 ml in einen Eimer mit 5 l Leitungswasser gegeben. Ein Haushaltsreinigungstuch (saugfähiges Kunstfaservlies) wurde in diese Mischung eingetaucht, kurz umgeschwenkt und dann durch Ausdrücken von überschüssiger Flüssigkeit befreit. Mit dem feuchten Tuch wurde dann eine angeschmutzte matt lackierte Holzoberfläche, die aus einer mit Teakholz furnierten Spanfaserplatte bestand, abgewischt. Nach dem Abtrocknen war die Oberfläche sauber, zeigte aber keinen zusätzlichen Glanz. Bei mehrfacher Anwendung des Verfahrens in eintägigem Abstand zeigte sich nicht die geringste Beschädigung der Oberfläche.

**Ansprüche**

1. Verfahren zur Reinigung und Pflege von Möbeln, bei dem eine Emulsion von Paraffinöl in Wasser zunächst im Verhältnis 1 : 500 bis 1 : 20 mit Wasser verdünnt und dann die Oberflächen der Möbel mit dieser verdünnten wäßrigen Zubereitung abgewischt werden.

2. Verfahren nach Anspruch 1, bei dem die Oberflächen nach dem Wischvorgang nicht getrocknet werden.

3. Verfahren nach einem der Ansprüche 1 oder 2, bei dem das Wischen mit Hilfe eines mit der Zubereitung angefeuchteten Vliesstoffes oder Schwammtuches erfolgt.

4. Verfahren nach einem der Ansprüche 1 bis 3, bei dem die Verdünnung 1 : 500 bis 1 : 50 beträgt.

5. Verfahren nach einem der Ansprüche 1 bis 4 zur Reinigung und Pflege von geölten, lasierten oder lackierten Oberflächen aus Holz oder Holzwerkstoffen.

6. Verfahren nach einem der Ansprüche 1 bis 5, bei dem die angewandte Emulsion in unverdünntem Zustand folgende Zusammensetzung hat:

| 5 - 30 Gew.-% | Paraffinöl |
|---|---|
| 1 - 5 Gew.-% | Emulgator |
| 0 - 10 Gew.-% | Wachs |
| 0 - 10 Gew.-% | Weitere Pflegesubstanzen |
| 0 - 20 Gew.-% | Benzin |
| 0 - 5 Gew.-% | übliche Hilfsstoffe |
| ad 100 Gew.-% | Wasser. |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | FR-A-2 277 559 (S.C. JOHNSON & SONS) * Anspruch 1; Seite 1, Zeilen 1-3; Seite 3, Zeilen 34-37; Seite 16, Beispiel 1 * | 1,6 | C 09 G 1/04 |
| A | --- | 2,3,5 | |
| Y | DE-A-2 023 204 (E. HOLBUS) * Anspruch 1; Seite 3, Absatz 2 * | 1,6 | |
| A | ----- | 4 | |
| | | | **RECHERCHIERTE SACHGEBIETE (Int. Cl.4)** |
| | | | C 09 G |

Der vorliegende Recherchenbericht wurde für alle Patentansprüche erstellt

| Recherchenort | Abschlußdatum der Recherche | Prüfer |
|---|---|---|
| DEN HAAG | 07-03-1989 | GIRARD Y.A. |

EPO FORM 1503 03.82 (P0403)

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument